# EUROPEAN PATENT SPECIFICATION

(11) **EP 2 718 600 B1**
(45) Date of publication and mention of the grant of the patent: **24.10.2018**
(21) Application number: 12725627.9
(22) Date of filing: 01.06.2012
(51) Int. Cl.: F16K 15/18

(54) **CHECK VALVES AND SYSTEMS FOR OPERATION OF SAME**
RÜCKSCHLAGVENTILE UND BETRIEBSSYSTEME DAFÜR
CLAPETS DE NON-RETOUR ET SYSTÈMES D'ACTIONNEMENT DE CES CLAPETS

(30) Priority: 09.06.2011 IT VI20110151
(43) Date of publication of application: 16.04.2014
(73) Proprietor: Emerson Automation Solutions Final Control Italia S.R.L., 29018 Lugagnano Val D'arda (PC) (IT)
(72) Inventor: MANZETTI, Bruno, I-29018 Lugagnano Val D'Arda/PC (IT); MARTELLA, Paolo, 13100 Vercelli (IT)
(74) Representative: Barker Brettell LLP
(86) International application number: PCT/EP2012/002343
(87) International publication number: WO 2012/167896

(56) References cited:
- EP-A2- 0 802 358
- FR-A1- 2 618 517
- US-A- 2 504 006
- US-A- 3 883 111

## Description

### FIELD OF THE INVENTION

The present invention relates to the field of check valves. In particular, the present invention relates to an actuation system of the sealing element of a check valve.

### PRIOR ART

Check valves are valves allowing only one flow direction. For example, these valves may be employed for systems for which the reflux of fluid is to be avoided.
In the check valves, the opening and closing of the valve is regulated by the flow flowing through the valve. In particular, when the flow of the fluid flowing through the valve flows in a direction (opening direction of the valve), it displaces the sealing element of the valve from the sealing position, thus opening the valve and flowing through same. On the contrary, when the flow flows in the opposite direction (closing direction of the valve), it pushes against the sealing element of the valve holding it steady in the sealing position and thus keeping the valve closed, or displacing the sealing element from a non-sealing position to the sealing position thus causing the valve to close. In this way, the reflux is prevented.
When the rate of flow flowing in the opening direction of the valve is enough to displace the sealing element of the valve from the sealing position, the valve opens and the fluid can flow through it. If, on the other hand, the rate of the fluid flowing in the opening direction of the valve is not enough to displace the sealing element, then the valve does not open. There is accordingly, a minimum threshold flow rate which allows opening of the valve. Flow rates which are lower than the minimum threshold flow rate do not trigger the opening of the valve.
One of the major problems concerning check valves is the vibration of the sealing element or "chattering effect" of the valve. This effect arises, in particular, when the pressure of the fluid flowing through the valve in the opening direction is low. Specifically, when the pressure of the fluid is too low to displace the sealing element from the sealing position, the fluid accumulates against the sealing element and the pressure starts to increase. As soon as the pressure reaches the minimum threshold value which allows opening the valve, the sealing element is displaced from the sealing position to a non-sealing position and the fluid starts flowing through the valve. This causes the immediate drop of pressure in the upstream region of the sealing element below the minimum threshold value and thus, the closing of the sealing element. In these conditions, the sealing element starts vibrating or repeatedly oscillating between the sealing position and a non-sealing position corresponding to a minimum opening degree of the valve (valve chattering). This effect is particularly undesired because the continuous vibration of the sealing element may damage the valve. Specifically, the seal of the valve will deteriorate. Furthermore, both the sealing element and the seat of the valve, with which the sealing element forms the seal, may be damaged by the vibration of the sealing element.

In the light of these considerations, the aim of the present invention is that of providing a system for the actuation of the sealing element of a check valve capable of avoiding in a simple and efficient way, the problem of the vibration or "chattering" of the sealing element of the valve.

The invention as defined by the appended claims allows achieving this aim.

European patent publication EP0802358 describes a check valve having a motor driven disk including a rotatable armature for rotating the check valve disk over its entire range of motion. In one embodiment, the check valve includes a valve body having a coolant flow channel extending therethrough and a valve body seat located on an inner surface of the valve body. The check valve further includes a disk assembly having a counterweight and a disk base which includes a seat for seating with the valve body seat. The disk assembly further includes a first hinge pin member which extends at least partially through the disk assembly and is engaged to the disk assembly. The disk assembly is rotatable relative to the first hinge pin member. The check valve also includes a motor having a stator frame with a stator bore therein. An armature is rotatably positioned within the stator bore and the armature is coupled to the disk assembly to cause the disk assembly to rotate about its full range of motion.

USA patent US2504006 describes a valve device comprising a pivoted flap valve, a stop device pivoted coaxially with respect to said flap valve to swing with respect to the latter, and means for pivotally adjusting said stop device to secure said flap valve closed and to variably predetermine the permissible amount of opening movement thereof.

### SUMMARY

The present invention is based on the idea of forcing the sealing element of a check valve in a non-sealing position corresponding to an opening degree of the valve which is equal to or higher than a first predefined opening degree when the increase of the opening degree of the valve with respect to the sealing position of the sealing element is equal to or greater than a predefined threshold. In this way, as soon as the valve is open with respect to the sealing position by a predefined opening degree, the sealing element is forced to remain open so as to prevent the possible decrease of the pressure due to the opening of the valve causing the closing of the sealing element and thus, giving rise to the so-called "chattering" effect or vibration of the sealing element.

According to an aspect of the invention, there is provided a system for the actuation of the sealing element of a check valve, as defined in claim 1.

The first predefined opening degree may be equal, for example, to the predefined threshold of the increase of the opening degree of the valve with respect to the sealing position. In this case, the sealing element is kept in the position corresponding to the predefined threshold for the increase of the opening degree. Alternatively, the first predefined opening degree may be higher than the predefined threshold of the increase of the opening degree of the valve with respect to the sealing position. In this case, the sealing element is advantageously forced to a non-sealing position corresponding to a valve opening degree higher than the opening degree corresponding to the predefined threshold.

According to a further embodiment of the present invention, a system is provided wherein the controller is further configured so as to suppress the forcing of the sealing element in a non-sealing position when the opening degree is equal to or higher than a second predefined opening degree, the second predefined opening degree being higher than the first predefined opening degree. In this way, when the rate of the flow of the fluid which must flow through the valve is sufficiently high so as to guarantee a high opening degree of the valve and to accordingly avoid the chattering effect, the sealing element is let free to move under the effect of the rate of flow of the fluid which flows through the valve. For example, in this way, if the fluid stops flowing, the sealing element is free to close the valve.

According to a further embodiment of the present invention, the controller is configured so as to force the rotation of the shaft around its longitudinal axis by a first predefined angle with respect to the position corresponding to the sealing position of the sealing element, when the shaft is rotated around its longitudinal axis by an angle equal to or higher than a first threshold angle with respect to the position corresponding to the sealing position of the sealing element so as to force the sealing element into a non-sealing position corresponding to an opening degree of the valve which is equal to or higher than the opening degree of the valve at the non-sealing position corresponding to the first threshold angle. Basically, in a valve comprising a shaft adapted to rotate around its longitudinal axis so as to displace the sealing element, the measure of the opening degree of the valve and thus, of the possible increase of same with respect to the sealing position, is performed in a simple and efficient way by measuring the rotation angle of the shaft with respect to the position of the shaft corresponding to the closing of the sealing element. Similarly, the selection of the predefined opening degree of the valve is performed operating on the rotation angle of the shaft around its own longitudinal axis.

According to a further embodiment of the present invention, a system is provided wherein the first threshold angle is greater than or equal to 1° and lower than or equal to 5°. These values of the first threshold angle correspond to the values of the increase of the opening degree of the valve with respect to the sealing position which are most critical in giving rise to the chattering effect. In particular, when the rate of flow of the fluid flowing through the valve is adequate enough to cause a rotation of the shaft around its longitudinal axis only by an angle comprised between 1° and 5° with respect to the position of the shaft corresponding to the closed sealing element, it is very likely that the chattering effect will arise.

According to a further embodiment of the present invention, a system is provided wherein the first predefined angle is equal to at least 10°. Forcing the shaft of the valve to rotate by at least 10° with respect to the position of the shaft corresponding to the sealing configuration of the valve, an optimum opening degree of the valve is guaranteed which also allows low flows to flow in an efficient way through the valve without causing a chattering effect.

According to a further embodiment of the present invention, a system is provided wherein the controller is configured so as not to force the rotation of the shaft when the shaft is rotated around its longitudinal axis by an angle equal to or higher than a second threshold angle with respect to the position of the shaft corresponding to the sealing position of the sealing element, the second threshold angle corresponding to a non-sealing position of the sealing element corresponding to an opening degree of the valve which is higher than the opening degree of the valve at the non-sealing position corresponding to the first predefined angle. In this way, when the rate of the flow of the fluid flowing through the valve is such as to guarantee a sufficient opening of same, the sealing element is not forced and the control on the opening and closing of the valve depends on the rate of flow of the fluid flowing through same. In particular, in the event the fluid stops flowing, the valve can be efficiently closed. Furthermore, under these conditions, the sealing element may be opened and closed according to the rate of flow of the fluid flowing through the valve.

According to a further embodiment of the present invention, a system is provided wherein the controller is configured so that the shaft is free to rotate from the sealing position to a plurality of non-sealing positions and vice versa when the shaft is rotated around its longitudinal axis by an angle equal to or higher than a second threshold angle with respect to the position of the shaft corresponding to the sealing position of the sealing element, the second threshold angle corresponding to a non-sealing position of the sealing element corresponding to an opening degree of the valve which is higher than the opening degree of the valve at the non-sealing position corresponding to the first predefined angle. In this way, when the pressure of the fluid flowing through the valve is sufficient to guarantee a sufficient opening of the valve, the shaft is free to rotate and the control of the opening and closing of the valve depends on the rate of flow of the fluid flowing through said valve. Specifically, in the event of cessation of the flow of the fluid, the valve can be efficiently closed. Furthermore, in the event of increase of the rate of the flow of the fluid flowing through the valve, the sealing element may be further opened. Similarly, in the case of decrease of the rate of flow of the fluid flowing through the valve, the opening degree of the sealing element can be reduced.

According to a further embodiment of the invention, a system is provided wherein the second threshold angle is equal to at least 20°. Threshold angles corresponding to at least 20° guarantee an optimum control of the operation of the valve. In particular, fluids having such a rate of flow to cause a rotation of the shaft by at least 20° with respect to the position of the shaft corresponding to the sealing position are such that the probability of arising of the chattering effect is very low, and it is thus, advantageous to interrupt the forcing of the opening of the sealing element for these values.

According to a further embodiment of the present invention, a system is provided wherein the actuator consists of a quarter turn actuator. This type of actuator can be particularly advantageous, for example, for systems wherein the rotation of the shaft between the position corresponding to the sealing position of the sealing element and the position corresponding to the maximum opening degree of the valve substantially corresponds to an angle of 90°.

According to a further embodiment of the present invention, a system is provided wherein the coupling element is adapted to rotate around the longitudinal axis of the shaft and wherein the cavity is such that the rotation of the coupling element forces the rotation of the shaft only for predefined rotation angles of the coupling element. In this way, the coupling is such that the shaft can be free to rotate around its longitudinal axis for predetermined positions of the cavity, i.e. for those positions corresponding to rotation angles of the coupling element which do not imply forcing the rotation of the shaft.

According to a further embodiment of the present invention, a system is provided wherein the cavity occupies an arc of the surface of the shaft substantially corresponding to the rotation angle of the shaft when the sealing element moves from the sealing position to the non-sealing position corresponding to the maximum opening degree of the valve and vice versa. In this way, it is possible to position the cavity of the coupling element in such a way that the shaft can freely rotate between the sealing position and the non-sealing position corresponding to the maximum opening degree of the valve. For example, the cavity could be such as to occupy an arc of the surface of the shaft substantially corresponding to a right angle. This configuration might be particularly advantageous, for example, for systems wherein the rotation of the shaft between the position corresponding to the sealing position of the sealing element and the position corresponding to the maximum opening degree of the valve substantially corresponds to an angle of 90°.

According to a further embodiment of the present invention, a system is provided wherein the controller comprises an electric circuit configured to control the displacement of the cavity of the coupling element, for example, for controlling the rotation of the coupling element around the longitudinal axis of the shaft.

According to a further embodiment of the present invention, a system is provided wherein the electric circuit controls the operation of a pneumatic circuit adapted to actuate the displacement of the cavity. The pneumatic circuit may comprise, for example, one or more pneumatic valves, for instance, electro-valves.

According to a non-claimed aspect, a check valve is provided comprising a sealing element and a system for the actuation of the sealing element according to the present invention.

According to a further non-claimed aspect, a method for the operation of a check valve comprising a sealing element is provided, the method comprising the following steps: determination of the increase of the opening degree of the valve when the sealing element is displaced from the sealing position to a non-sealing position; forcing the sealing element into a non-sealing position corresponding to an opening degree of the valve equal to or higher than a first predefined opening degree when the increase is equal to or higher than a predefined threshold. In this way, as soon as the valve is open with respect to the sealing position by a predetermined opening degree, the sealing element is forced to be open so as to avoid that the possible decrease of the pressure due to the opening of the valve causes the closing of the sealing element and thus giving rise to the so-called chattering effect or vibration of the sealing element. The first predefined opening degree may, for example, be equal to the predefined threshold for the increase of the opening degree of the valve with respect to the sealing position. In this case, the sealing element is kept in the position corresponding to the predefined threshold for the increase of the opening degree. Alternatively, the first predefined opening degree may be higher than the predefined threshold for the increase of the opening degree of the valve with respect to the sealing position. In this case, the sealing element is advantageously forced to a non-sealing position corresponding to an opening degree of the valve which is higher than the opening degree corresponding to the predefined threshold.

The forcing may be suppressed when the opening degree of the valve is equal to or higher than a second predefined opening degree, the second predefined opening degree being higher than the first predefined opening degree. In this way, when the rate of flow of the fluid that must flow through the valve is sufficiently high so as to guarantee a high opening degree of the valve and to thus avoid the chattering effect, the sealing element is let free to displace under the effect of the rate of flow of the fluid flowing through the valve. For example, in this way, if the fluid stops flowing, the sealing element of the valve can close.

The check valve may comprise a shaft adapted to rotate around its longitudinal axis so as to displace the sealing element from a sealing position to a plurality of non-sealing positions and vice versa and where the determination of the increase of the opening degree of the valve comprises the determination of the rotation angle of the shaft around its longitudinal axis with respect to the position of the shaft corresponding to the sealing position of the sealing element.

### BRIEF DESCRIPTION OF THE FIGURES

The present invention will be described with reference to the appended Figures wherein the same reference signs relate to the same parts and/or to similar parts of the system. In the Figures:
Figure 1 schematically displays a section of a check valve according to an embodiment of the present invention;
Figure 2 schematically displays a section view on plane 2 shown in Figure 1;
Figure 3A schematically displays a portion of the shaft and of the coupling element of a check valve according to an embodiment of the present invention;
Figure 3B schematically displays a portion of the shaft shown in Figure 3A;
Figures 4A to 4D schematically display in section the positions of the shaft and of the coupling element of a check valve during the operation of the valve according to an embodiment of the present invention;
Figures 5A to 5C schematically display in section the positions of the shaft and of the coupling element of a check valve during the operation of the valve according to an embodiment of the present invention;
Figure 6 schematically displays a pneumatic circuit for the control of the sealing element of a check vale according to an embodiment of the present invention;
Figure 7 schematically displays an electric circuit for the control of the pneumatic circuit shown in Figure 6.

### DETAILED DESCRIPTION

In the following, the present invention is described with reference to particular embodiments as shown in the enclosed drawings. Nevertheless, the present invention is not limited to the particular embodiments described in the following detailed description and shown in the Figures, but, instead, the embodiments described simply exemplify several aspects of the present invention, the scope of which is defined by the appended claims.

Further modifications and variations of the present invention will be clear for the person skilled in the art. Therefore, the present description has to be considered as including all the modifications and/or variations of the present invention, the scope of which is defined by the appended claims.

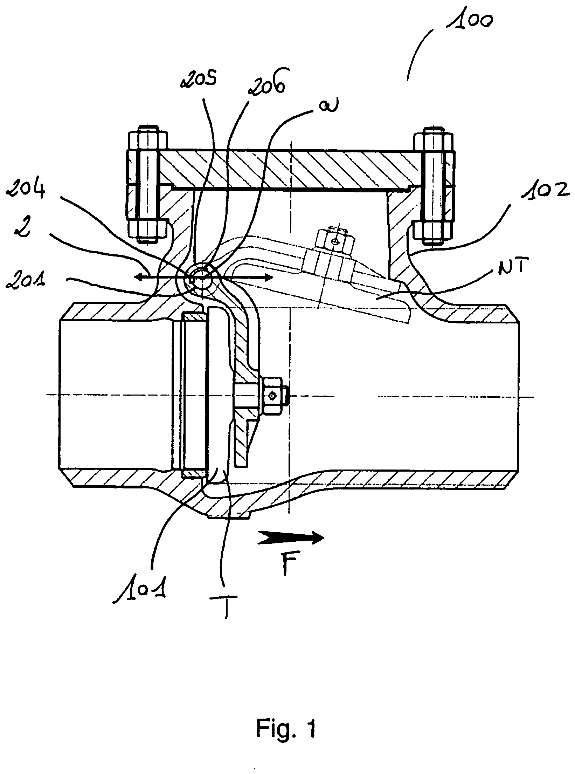

Figure 1 schematically displays a section of a check valve 100 according to an embodiment of the present invention. The opening direction is shown by arrow F. In particular, arrow F shows the direction of the flow flowing through the valve 100 during normal operation of the valve.

The check valve 100 comprises a valve body 102 and a sealing element 101. The sealing element 101 may be placed in several positions inside the valve body. In particular, the sealing element 101 may be placed in a sealing position T wherein the flow is prevented from flowing through the valve. When the sealing element 101 is in the sealing position T, the valve is closed. The sealing element 101 may be brought to the sealing position T, for example, because of its own weight. In particular, in the event of absence of flow inside the valve, the sealing element 101 may assume the sealing position T because of its own weight. Furthermore, the sealing element 101 may also be brought into the sealing position T in the presence of a flow in an opposite direction with respect to the direction shown by arrow F. In this case, the flow in an opposite direction compared to arrow F (reflux) pushes the sealing element 101 into the sealing position T so that the check valve 100 is closed and prevents reflux.

The sealing element 101 may also be brought into the sealing position T by the rotation of the shaft 201 by means of the actuator 202 when the actuator is de-energized. In particular, the actuator 202 may comprise elastic means adapted to bring the sealing element 101 into the sealing position T when the actuator is de-energized. The elastic means may, for instance, comprise a spring.

The sealing element 101 may be placed in a plurality of non-sealing positions. When the sealing element 101 is in a non-sealing position, the valve 100 is open and the flow can flow in the direction shown by the arrow F. The sealing element 101 may be brought into a non-sealing position because of the flow flowing in the direction shown by the arrow F. In particular, the flow flowing in the direction shown by the arrow F pushes the sealing element 101 and forces it to be placed in a non-sealing position opening the valve 100 and thus allowing the flow of fluid. Furthermore, the sealing element 101 may be brought into a non-sealing position by means of the actuation system as described in detail below.

Each of the different non-sealing positions of the sealing element 101 corresponds to a different opening degree of the valve 100.

In particular, in Figure 1, the non-sealing position NT of the sealing element 101 corresponding to the maximum opening degree of the valve is shown by means of the thin line.

The opening degree of the valve at a certain moment corresponds to a measure of the flow capacity of the valve at that moment. For example, several non-sealing positions of the sealing element 101 may correspond to several different sections of the area which is left open for the flow of fluid by the sealing element 101.

The sealing element 101 may comprise, for example, a disc or shutter comprising none, one or more gaskets.

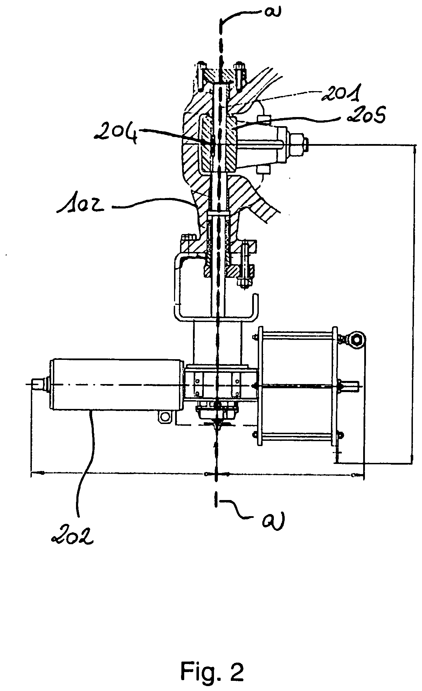

The valve 100 shown in Figure 1 comprises a shaft 201 connected to the sealing element 101 so as to be integrated with same. Specifically, the shaft 201 is adapted to rotate around its own longitudinal axis so as to displace the sealing element 101. The longitudinal axis a of the shaft 201 is perpendicular to the plane of Figure 1 and is clearly shown in Figure 2 which displays a section view of the system on the plane indicated by reference number 2 in Figure 1. The rotation of the shaft 201 around its own longitudinal axis a implies the displacement of the sealing element 101 from the sealing position T to one of the possible non-sealing positions. Furthermore, the displacement of the sealing element 101 from one position to another implies the rotation of the shaft 201 around its own longitudinal axis a. In other words, when the shaft is rotated, for example by means of an actuator, the sealing element 101 is displaced. Furthermore, when the flow flowing through the valve displaces the sealing element 101, the shaft 201 is rotated.

In the example schematically shown in Figure 1, when the sealing element 101 goes from the sealing position T to the non-sealing position NT, the shaft 201 rotates in an anticlockwise direction around its longitudinal axis a. When the sealing element 101 goes from the non-sealing position NT to the sealing position T, the shaft 201 rotates in a clockwise direction around its longitudinal axis a. Similarly, when rotating the shaft 201 in an anticlockwise direction, it is possible to open the valve and it is thus possible to displace the sealing element 101 from the sealing position T to a non-sealing position NT. Furthermore, when rotating the shaft 201 in an anticlockwise direction, it is also possible to displace the sealing element 101 from a non-sealing position corresponding to a predetermined opening degree of the valve to a non-sealing position corresponding to a higher opening degree of the valve. When rotating the shaft 201 in a clockwise direction, it is possible to close the valve and it is thus possible to displace the sealing element 101 from any non-sealing position NT to a sealing position T. Furthermore, when rotating the shaft in a clockwise direction, it is also possible to displace the sealing element 101 from a non-sealing position corresponding to a determined opening degree of the valve to a non-sealing position corresponding to a lower opening degree of the valve.

The shaft 201 may have a length such as to protrude laterally from the valve body 102 of the check valve 100 as schematically shown in Figure 2. This allows, for example, easy coupling of the shaft 201 to an actuator 202 which is placed outside the valve body 102 of the valve 100.

The actuator 202 allows rotation of the shaft 201 around its longitudinal axis a and thus, to displace the sealing element 101. According to the present invention, the actuator 202 may consist, for example, of a quarter turn actuator. This is particularly advantageous when a quarter of a turn, i.e. a rotation of the shaft 201 by 90° around its own longitudinal axis a, allows displacing the sealing element 101 from the sealing position T to the non-sealing position NT corresponding to the maximum opening degree of the valve and vice versa. According to the present invention, the actuator may be a pneumatic actuator, a hydraulic actuator or an electric actuator.

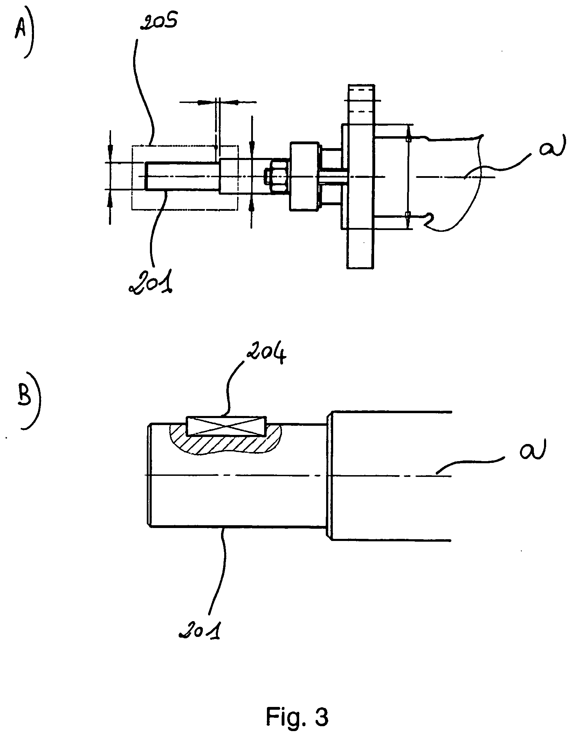

The coupling between the actuator 202 and the shaft 201 may be realized by means of a coupling element 205 as schematically shown in Figure 3A. In particular, the shaft 201 may comprise a protruding element 204 as schematically shown in Figure 3B. The coupling element 205 may comprise a cavity 206 adapted to house the protruding element 204 of the shaft 201 so that displacement of the cavity 206 can force the displacement of the protruding element 204 and thus the rotation of the shaft 201 around its longitudinal axis a. Furthermore, the coupling element 205 may be adapted to rotate around the longitudinal axis a of the shaft 201 and the cavity 206 may be such that the rotation of the coupling element 205 forces the rotation of the shaft 201 only for predetermined rotation angles of the coupling element 205. In particular, the cavity 206 may be such that the shaft 201 can freely rotate around the axis a with respect to the coupling element 205 for predetermined rotation angles of the shaft 201. This may be realized, for example, by allowing the cavity 206 to occupy an arc of the circumference of the shaft 201 which is longer than the arc of the circumference of the shaft 201 occupied by the protruding element 204. In this way, the protruding element 204 may freely move inside the cavity 206 and the shaft 201 may thus rotate independently of the coupling element 205.

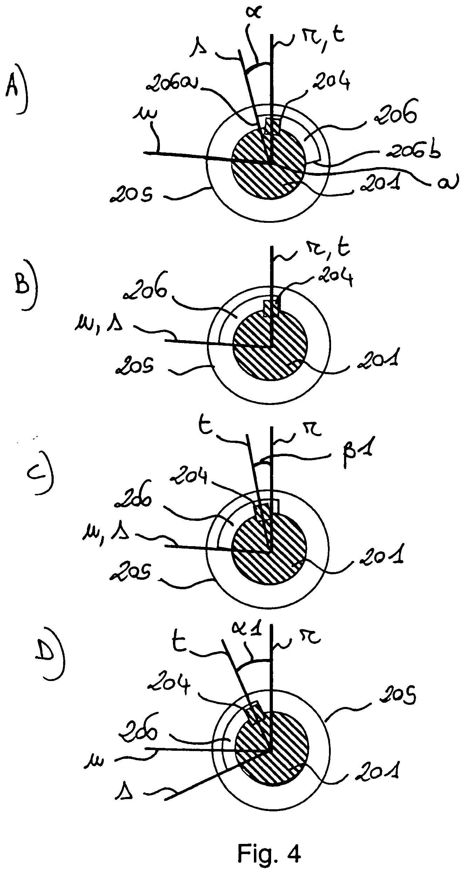

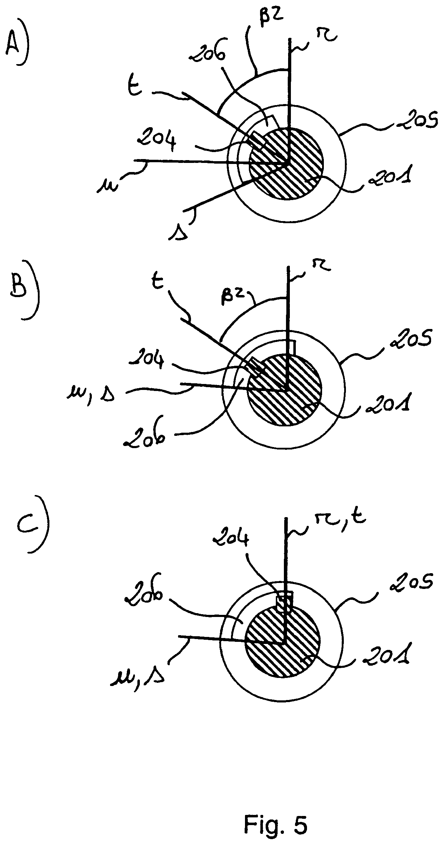

Figures 4A to 4D and 5A to 5C schematically show in section the positions of the shaft 201 and of the coupling element 205 of a check valve during operation of the valve according to an embodiment of the present invention. The longitudinal axis a of the shaft 201 is perpendicular to the plane of the Figures 4A to 4D and 5A to 5C.

Similarly to what is schematically shown in Figure 1, and also in Figures 4A to 4D and 5A to 5C, the rotation in the anticlockwise direction of the shaft 201 around its longitudinal axis a implies an increase of the opening degree of the valve while the rotation in the clockwise direction implies the decrease of the opening degree of the valve.

The section views of Figures 4A to 4D and 5A to 5C also show the cavity 206 of the coupling element 205 and the protruding element 204 of the shaft 201 housed inside the cavity 206. The coupling element 205 is adapted to rotate around a longitudinal axis a of the shaft 201. Furthermore, the coupling element 205 surrounds the shaft 201. The cavity 206 of the coupling element is such that it occupies an arc of the circumference of the shaft 201 longer than the arc occupied by the protruding element 204. In this way, the shaft 201 can rotate around its own longitudinal axis a independently of the coupling element 205. In particular, the shaft 201 can rotate between a first and a second position wherein the first position corresponds to the contact between the protruding element 204 and a first side wall 206a of the cavity 206 and the second position corresponds to the contact between the protruding element 204 and a second side wall 206b of the cavity 206. The shaft 201 can thus take any configuration corresponding to a position of the protruding element 204 comprised between the contact position with the first side wall 206a and the contact position with the second side wall 206b.

In the example schematically shown in Figures 4A to 4D and 5A to 5C, the cavity 206 occupies an arc of the circumference of the surface of the shaft 201 corresponding to an angle of about 90°. In particular, the cavity 206 occupies an arc corresponding to an angle of 85°. For appropriate positions of the coupling element as described in detail below, the shaft 201 can thus freely rotate around its own longitudinal axis a by an angle corresponding to approximately, 90°, i.e. by approximately a quarter of a turn.

Since the shaft 201 is integrally rigid with the sealing element 101, the rotation of the shaft 201 is not only constrained by the side walls 206a and 206b of the cavity 206 but also by the end points of the travel range of the sealing element 101. In particular, the rotation of the shaft 201 around its own longitudinal axis a is constrained between the position of the shaft corresponding to the sealing position T of the sealing element 101 and the position of the shaft corresponding to the non-sealing position NT of the sealing element 101 corresponding to the maximum opening degree of the valve 100. In the example shown in Figure 1, the travel range of the sealing element 101 between the sealing position T and the non-sealing position NT corresponding to the maximum opening degree of the valve corresponds to a rotation of the shaft 201 around its own longitudinal axis by about 90°. This is shown in Figures 4A to 4D and 5A to 5C by the line u. When the protruding element 204 is aligned with the line u (line t coinciding with line u), the sealing element 101 is in the non-sealing position NT corresponding to the maximum opening degree of the valve.

It is thus advantageous that the cavity 206 of coupling element 205 occupies an arc of the circumference of the shaft 201 corresponding to an angle substantially equal or greater than the rotation angle of the shaft between the sealing position T and the non-sealing position NT corresponding to the maximum opening degree of the valve. In this way, it is possible to position the coupling element in such a way that the shaft 201 is completely free to rotate between the sealing position T of the sealing element 101 and the non-sealing position NT corresponding to the maximum opening degree of the valve.

Figure 4A schematically shows the situation wherein the shaft 201 is in a position corresponding to the sealing position T of the sealing element 101 (valve closed). Line r shown in Figures 4A to 4D and 5A to 5C schematically shows the position of the shaft 201 corresponding to the condition of valve closed. In particular, when the protruding element 204 of the shaft 201 is aligned to line r, the sealing element 101 is in the sealing position T and the valve 100 is closed.

In Figures 4A to 4D and 5A to 5C, line t is schematically shown corresponding to the position of the protruding element 204. In the case shown in Figure 4A, lines r and t coincide, showing that the sealing element 101 is in the sealing position T and the valve is closed.

A clockwise rotation of the shaft 201 is not possible because the sealing element 101 is in the sealing position T and thus at the end point of its travel range. The shaft 201 can rotate instead in the anticlockwise direction and thus displace the sealing element 101 from the sealing position T to any non-sealing position. This rotation of the shaft 201 may nevertheless be limited by the coupling element 205 and, in particular, by the position of the cavity 206 as described in detail below.

Line s shown in Figures 4A to 4D and 5A to 5C represents the position of the first side wall 206a of the cavity 206 of the coupling element 205.

In the situation shown in Figure 4A, the position of the cavity 206 of the coupling element 205 is such that line s is at an angle α with respect to line t. The shaft 201 is thus free to rotate around its longitudinal axis a in an anticlockwise direction by an angle corresponding at the maximum to α. The sealing element 101 can thus be displaced from the sealing position T to a non-sealing position, for example, because of the flow of fluid flowing through the valve. Nevertheless, this displacement is limited because of the position of the coupling element 205 and in particular because of the position of the cavity 206 so that it is not possible that the sealing element is brought to a non-sealing position corresponding to the maximum opening degree of the valve. For example, the angle α may be substantially equal approximately to 5°.

In the situation shown in Figure 4B, the valve is closed (line t coinciding with line r) and the coupling element 205 is rotated so that the second side wall 206b of the cavity 206 is in contact with the protruding element 204 of the shaft 201. Line s is thus at an angle to line r by an angle corresponding to the angle occupied by the cavity 206 (85° in the example shown in Figure 4B).

In this configuration, the shaft 201 can freely rotate from the position corresponding to the sealing position T of the sealing element 101, to the position corresponding to the maximum opening degree of the valve. When the shaft 201 rotates up to the position corresponding to the maximum opening degree of the valve, line t coincides with line s.

In the configuration shown in Figure 4B, the sealing element 101 of the valve 100 can be pushed by the flow flowing through the valve so as to take any non-sealing position and so as to open the valve. In the event of absence of flow, the sealing element 101 may go back to the sealing position T, for example, because of its own weight.

Figure 4C shows the configuration of the system in the presence of a flow forcing the opening of the valve. The flow pushes the sealing element 101 and displaces it from the sealing position T to a non-sealing position. As a consequence, the shaft 201 rotates in an anticlockwise direction and line t reaches a position at an angle β1 with respect to line r. In the case shown in Figure 4C, the coupling element is in the same position shown in Figure 4B.

The chattering effect as explained above could arise if the angle β1 assumes low values. For example, the chattering effect could arise for values of β1 comprised between 1° and 5°.

For this reason, as shown in Figure 4D, the system is configured so that when the shaft 201 is rotated around its own longitudinal axis a by an angle equal to a first threshold angle β1 with respect to the position corresponding to the sealing position T of the sealing element, the coupling element is forced to rotate so as to force a further rotation of the shaft 201 and thus, a further opening of the valve to an opening degree which is higher than a predefined opening degree. In fact, in Figure 4D, the coupling element 205 is rotated in an anticlockwise direction so that the second side wall 206b of the cavity 206 pushes the protruding element 204 of the shaft up to a position wherein line t forms a first predefined angle α1 with line r. Angle α1 may be, for example, an angle of at least 10° so as to guarantee an appropriate opening degree of the valve. In this way, the valve is forced to be kept open so as to prevent the chattering effect from arising. The first threshold angle β1 may be advantageously selected so as to be equal to 1° so as to guarantee the removal of the chattering effect when the flow capacity of the valve is very low.

In the configuration shown in Figure 4B, the opening degree of the valve can increase, for example, because of the increase of the flow capacity of the flow flowing through the valve. Cavity 206 is in fact positioned so that the shaft 201 can freely rotate further in an anticlockwise direction. Furthermore, as schematically shown in Figure 4D, line s has gone beyond line u in an anticlockwise direction and the sealing element 101 is free to open up to the maximum opening degree of the valve.

When the flow of the valve is such as to rotate the shaft 201 by an angle equal or higher than a second threshold angle β2 higher than the first predefined angle α1, the system is configured so that the shaft 201 becomes free again to rotate between the sealing position and any non-sealing position under the effect of the fluid flowing in the valve and of its own weight if there is no flow. This is schematically shown in Figures 5A and 5B.

Figure 5A shows that, with respect to the situation shown in Figure 4D, the flow in the valve is increased and the shaft 201 is further rotated in an anticlockwise direction until line d (position of the protruding element 204) forms an angle β2 with respect to line r, and β2 is higher than angle α1 to which the shaft 201 was forced in the configuration of the system shown in Figure 4D. Figure 5A shows that the coupling element 205 is in the same position shown in Figure 4D.

When the flow in the valve has such a rate as to open the sealing element behind the threshold represented by angle β2, it is advantageous to allow the shaft 201 to be freely rotatable under the action of the flow. In particular, it is advantageous to allow the sealing element 101 to be free to close in the sealing position, for example under the effect of its own weight, in case the flow stops flowing through the valve, or in case of reversal of the flow.

For this reason, as shown in Figure 5B, the system is configured so as to bring the coupling element back to the position wherein the shaft 201 is free to rotate so that the sealing element 101 can take all positions comprised between the sealing position T and the non-sealing position NT corresponding to the maximum opening degree of the valve. In the configuration shown in Figure 5B, line s coincides again with line u. Basically, in the configuration shown in Figure 5B, the coupling element 205 is brought back to the position which it occupied in the configurations shown in Figures 4B and 4C. Advantageously, angle β2 is chosen so as to be equal to at least 20°. When the flow in the valve is such as to force the sealing element 101 in a non-sealing position corresponding to a rotation of the shaft 201 of at least 20° with respect to the sealing position, it is advantageous that the sealing element 101 is free to displace under the action of the flow. In particular, it is advantageous that, in case of stop of the flow or reversal of the flow, the sealing element is allowed to go back to the sealing position.

Figure 5C shows in fact that, in case of stop or reversal of the flux of the flow, the shaft 201 can rotate to the sealing position wherein the protruding element is aligned with line r (line t coinciding with line r).

The system according to the present invention may be operated by means of a pneumatic circuit.

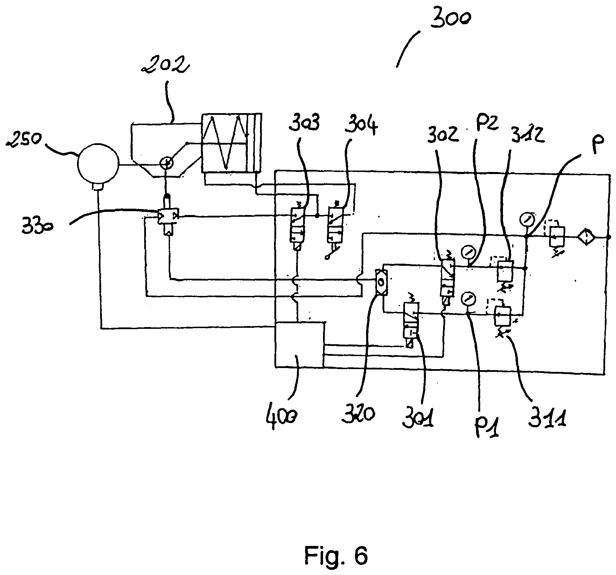

An example of a pneumatic circuit adapted to operate a system according to the present invention is schematically shown in Figure 6.

The pneumatic circuit 300 comprises a first valve 301, a second valve 302 and a third valve 303. One or more of the three valves can be for example an electrovalve. The three valves are adapted to feed the system so as to actuate, for example by means of the actuator 201, the movement of the coupling element 205.

In particular, third valve 303 is adapted to enable and disable the pneumatic supply towards the actuator 202. When the third valve 303 is activated, the actuator 202 can be supplied and thus displaced by means of the first valve 301 and of the second valve 302. When the third valve 303 is not activated, actuator 202 cannot be supplied and the coupling element 205 is in a position such as the one schematically shown in Figure 4A. In particular, the coupling element 205 is in a position such that the shaft can rotate so as to open the valve. Nevertheless, the shaft can only rotate by an angle α which is lower with respect to the angle corresponding to the maximum opening degree of the valve. α can be for example equal to 5°.

Valves 301 and 302 control the displacement of the coupling element 205 when the third valve 303 is activated.

First valve 301 allows the flow of supply gas at a first pressure P1. In particular, the system 300 is supplied with a gas having a pressure P and valve 301 receives an input gas having the reduced pressure P1 obtained by means of the pressure reducer 311.

The first valve 301 delivers gas having pressure P1 to the actuator 202 by means of the selector 320 and positioner 330. Pressure P1 may be for example equal to 13.7 PSI (1PSI = 0,0689 bar).

When the actuator 202 is supplied with pressure P1, coupling element 205 is forced to take a position wherein the shaft 201 can freely rotate between the sealing position and the non-sealing position corresponding to the maximum opening degree of the valve. In particular, when the actuator 202 is supplied with pressure P1, coupling element 205 is forced to take the position shown for example in Figures 4B, 4C, 5B and 5C.

Second valve 302 allows the flow of supply gas having a second pressure P2 which is higher than pressure P1. Reducer 312 allows the supply of the second valve 302 with the gas having pressure P2 starting from pressure P with which the circuit 300 is supplied. Second valve 302 delivers therefore gas having pressure P2 to the actuator 202 by means of selector 320 and positioner 330. Pressure P2 may be for example equal to 16 PSI.

When actuator 202 is supplied with pressure P2 higher than pressure P1, coupling element 205 is forced to take the position wherein the shaft 201 is forced to rotate so as to open the valve. In particular, when actuator 202 is supplied with pressure P2 which is higher than pressure P1, coupling element 205 is forced to take a configuration shown in Figures 4D and 5A.

Pneumatic circuit may further comprise a fourth test valve 304. Fourth test valve 304 can be activated on purpose by the user so as to visually control that the coupling element moves towards the position shown in Figure 4A. When the fourth test valve 304 is deactivated, the coupling element goes back to the position determined by the configuration of the valves 301, 302 and 303 of the circuit 300.

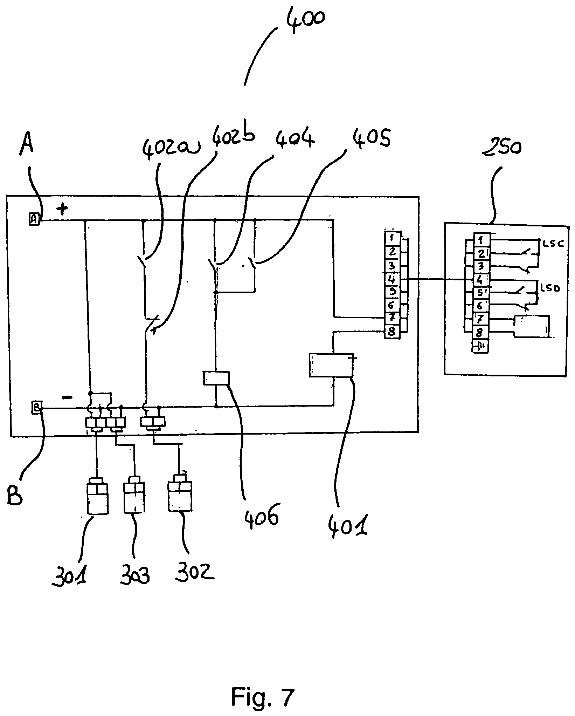

The operations of the pneumatic circuit 300 can be controlled by an electric circuit 400. An example of such a circuit is schematically shown in Figure 7.

The circuit is such that when there is no potential difference between points A and B, each of the three valves 301, 302 and 303 is deactivated, the coupling element 205 is in the position shown in Figure 4A, and the sealing element 101 is in the sealing position T because of its weight.

When the circuit is instead supplied and there is a potential difference between points A and B, third valve 303 and first valve 301 are activated so as to bring the coupling element 205 in the position shown in Figures 4B and 4C. In particular, actuator 202 is supplied by pressure P1 by means of the first valve 301.

Circuit 400 comprises a threshold reader 401. The threshold reader may be connected to the coupling element 205 by means of a position sensor 250. Position sensor 250 may for example comprise a first sensor and a second sensor. The first sensor may be adapted to detect when the increase of the opening degree of the valve with respect to the sealing position is equal to or higher than the predefined threshold. The second sensor may be adapted to detect when the opening degree is equal to or higher than the second predefined opening degree. For example, first sensor may comprise a micro-switch installed in the coupling element so as to detect the rotation of the shaft by an angle equal to at least β1 with respect to the position corresponding to the sealing position. The second sensor may comprise a micro-switch installed in the coupling element so as to detect when the shaft is rotated by an angle equal to at least β2 with respect to the position corresponding to the sealing position.

When the threshold reader 401 detects the signal that corresponds to an increase of the opening degree equal to or higher than the predefined threshold (rotation by at least β1 with respect to the sealing position), switch 402a is closed so as to supply the second valve 302 through the contact 402b. Second valve 302 is thus activated and supplies actuator 202 with pressure P2 higher than pressure P1 so as to force the coupling element 205 in the position shown in Figure 4D so as to ultimately force opening of the valve and to avoid the chattering effect.

When the threshold reader detects a signal corresponding to a reaching of the opening degree equal to or higher than the second predefined opening degree (angle β2), contact 404 is closed so as to activate relay 406 and to close contact 405 which in turn allows relay 406 to remain activated. In this way, second valve 302 is deactivated by means of contact 402b while first valve 301 remains activated. Actuator 202 is thus newly supplied only by pressure P1 and for this reason the coupling element 205 goes back to the position shown for example in Figure 5B.

In case of emergency, it is possible to remove the power supply between points A and B of the circuit so as to deactivate all three valves 301, 302 and 303. In this case, valve 303 can be for example adapted to guarantee discharge in air of the supply pressure of the coupling element 205 so as to bring the system in a position as schematically shown in Figure 4A.

Advantageously, third valve 303 may be certified to level SIL3 (Safety Integrity Level). Furthermore, the actuator 202 adapted to displace the coupling element 205 may be advantageously certified to level SIL3.

Even if the present invention was described with reference to the particular embodiments described above, it is clear for the person skilled in the art that it is possible to realize several modifications, variations and improvements of the present invention in the light of the teaching described above and in the ambit of the appended claims without departing from the subject matter and the scope of protection of the invention.

For example, the travel range of the sealing element from the sealing position to the position corresponding to the maximum opening degree of the valve may correspond to a rotation of the shaft around its own longitudinal axis by an angle which is different from 90° (quarter of a turn). The system according to the present invention may be for example employed for travel ranges corresponding to rotations which are higher or lower than 90°.

Furthermore, the system and method described may be employed for several kinds of check valves, for example for check valves having different dimensions, for check valves adapted for flow of gas, for check valves adapted for flow of liquids and so on.

Furthermore, those aspects which are believed to be known for the person skilled in the art, have not been described so as not to unnecessarily obscure the invention described.

Accordingly, it has to be understood that the invention is not to be limited by the specific illustrative embodiments, but only by the scope of the appended claims.

## Claims

1. System for the actuation of the sealing element (101) of a check valve (100) comprising:
a controller configured so that said sealing element (101) is forced in a non-sealing position (NT) corresponding to an opening degree of the valve (100) equal to or higher than a first predefined opening degree when the increase of the opening degree with respect to a sealing position (T) of said sealing element (101) is equal to or greater than a predefined threshold;
a shaft (201) adapted to rotate around its longitudinal axis (a) so as to displace said sealing element (101) from the sealing position (T) to a plurality of non-sealing positions (NT), and vice versa, the shaft being coupled to an actuator (202) adapted to couple the controller to the shaft (201),
**characterised in that** the shaft (201) comprises a protruding element (204) and wherein the coupling between the actuator (202) and said shaft (201) is realized by means of a coupling element (205) comprising a cavity (206) adapted to house said protruding element (204) so that the displacement of said cavity (206) can force the rotation of said shaft (201) around its longitudinal axis (a) by means of said protruding element (204).

2. System according to claim 1, wherein said controller is further configured so as to. suppress the forcing of said sealing element (101) in a non-sealing position (NT) when the opening degree is equal to or higher than a second predefined opening degree, said second predefined opening degree being higher than said first predefined opening degree.

3. System according to one of claims 1 or 2, wherein said controller is configured so as to force the rotation of said shaft (201) around its longitudinal axis (a) by a first predefined angle (a1) with respect to the position corresponding to the sealing position (T) of the sealing element (101) when said shaft (201) is rotated around its longitudinal axis (a) by an angle equal to or higher than a first threshold angle (β1) with respect to the position corresponding to the sealing position (T) of the sealing element (101) so as to force said sealing element (101) in a non-sealing position corresponding to an opening degree of the valve (100) which is equal to or higher than the opening degree of the valve (100) at the non-sealing position corresponding to said first threshold angle (β1).

4. System according to claim 3, wherein said first threshold angle (β1) is greater than or equal to 1° and lower than or equal to 5°.

5. System according to one of claims 3 or 4, wherein said first predefined angle (a1) is equal to at least 10°.

6. System according to one of claims 3 to 5, wherein said controller is configured so as not to force the rotation of said shaft (201) when said shaft (201) is rotated around its longitudinal axis (a) by an angle equal to or higher than a second threshold angle (β2) with respect to the position of the shaft (201) corresponding to the sealing position (T) of the sealing element (101), said second threshold angle (β2) corresponding to a non- sealing position of said sealing element (101) corresponding to an opening degree of the valve (100) which is higher than the opening degree of the valve (100) at the non-sealing position corresponding to said first predefined angle (a1).

7. System according to one of claims 3 to 6, wherein said controller is configured so that said shaft (201) is free to rotate from the position corresponding to a non-sealing position (NT) to the position corresponding to the sealing position (T) and vice versa when said shaft (201) is rotated around its longitudinal axis (a) by an angle equal to or higher than a second threshold angle (β2) with respect to the position of the shaft (201) corresponding to the sealing position (T) of the sealing element (101), said second threshold angle (β2) corresponding to a non-sealing position of said sealing element (101) corresponding to an opening degree of the valve (100) which is higher than the opening degree of the valve (100) at the non-sealing position corresponding to said first predefined angle (a1).

8. System according to one of claims 6 or 7, wherein said second threshold angle (β2) is equal to at least 20°.

9. System according to any preceding claim, wherein said actuator (202) consists of a quarter-turn actuator.

10. System according to any preceding claim, wherein said coupling element (205) is adapted to rotate around the longitudinal axis (a) of said shaft (201) and wherein said cavity (206) is such that the rotation of said coupling element (205) forces the rotation of said shaft (201) only for predefined rotation angles of said coupling element (205).

11. System according to any preceding claim, wherein said cavity (206) occupies an arc of the surface of said shaft (201) substantially corresponding to the rotation angle of said shaft (201) when the sealing element (101) moves from the sealing position (T) to the non-sealing position (NT) corresponding to the maximum opening degree of the valve and vice versa.

12. System according to any preceding claim, wherein said controller comprises an electric circuit (400) configured to control the displacement of said cavity (206).

13. System according to claim 12, wherein said electric circuit (400) controls the operation of a pneumatic circuit (300) adapted to actuate the displacement of said cavity (206).

## Patentansprüche

1. System zur Betätigung des Dichtungselements (101) eines Rückschlagventils (100), umfassend:
ein Steuergerät, das derart konfiguriert ist, dass das Dichtungselement (101) in eine Nicht-Dichtungsposition (NT) gedrängt wird, die einem Öffnungsgrad des Ventils (100) entspricht, der gleich einem oder größer als ein erster vorbestimmter Öffnungsgrad ist, wenn die Erhöhung des Öffnungsgrads mit Bezug auf eine Dichtungsposition (T) des Dichtungselements (101) gleich einem oder größer als ein vorbestimmter Schwellenwert ist;
eine Welle (201), die dazu ausgelegt ist, sich um ihre Längsachse (a) zu drehen, um das Dichtungselement (101) aus der Dichtungsposition (T) in eine Vielzahl von Nicht-Dichtungspositionen (NT) und umgekehrt zu verschieben,
wobei die Welle an einen Stellantrieb (202) gekoppelt ist, der dazu ausgelegt ist, das Steuergerät an die Welle (201) zu koppeln,
**dadurch gekennzeichnet, dass** die Welle (201) ein herausragendes Element (204) umfasst und wobei die Kopplung zwischen dem Stellantrieb (202) und der Welle (201) mittels eines Kopplungselements (205) realisiert wird, das einen Hohlraum (206) umfasst, der dazu ausgelegt ist, das herausragende Element (204) unterzubringen, so dass die Verschiebung des Hohlraums (206) die Drehung der Welle (201) um ihre Längsachse (a) mittels des herausragenden Elements (204) erzwingen kann.

2. System nach Anspruch 1, wobei das Steuergerät weiter konfiguriert ist, das Drängen des Dichtungselements (101) in eine Nicht-Dichtungsposition (NT) zu unterdrücken, wenn der Öffnungsgrad gleich einem oder größer als ein zweiter vorbestimmter Öffnungsgrad ist, wobei der zweite vorbestimmte Öffnungsgrad größer als der erste vorbestimmte Öffnungsgrad ist.

3. System nach einem der Ansprüche 1 oder 2, wobei das Steuergerät derart konfiguriert ist, die Drehung der Welle (201) um ihre Längsachse (a) um einen ersten vorbestimmten Winkel (a1) mit Bezug auf die Position zu erzwingen, die der Dichtungsposition (T) des Dichtungselements (101) entspricht, wenn die Welle (201) um ihre Längsachse (a) um einem Winkel gedreht wird, der gleich einem oder größer als ein erster Schwellenwertwinkel (β1) mit Bezug auf die Position ist, die der Dichtungsposition (T) des Dichtungselements (101) entspricht, um das Dichtungselement (101) in eine Nicht-Dichtungsposition zu drängen, die einem Öffnungsgrad des Ventils (100) entspricht, der gleich einem oder größer als der Öffnungsgrad des Ventils (100) an der Nicht-Dichtungsposition ist, die dem ersten Schwellenwertwinkel (β1) entspricht.

4. System nach Anspruch 3, wobei der erste Schwellenwertwinkel (β1) größer als oder gleich 1° und kleiner als oder gleich 5° ist.

5. System nach einem der Ansprüche 3 oder 4, wobei der erste vorbestimmte Winkel (a1) mindestens gleich 10° ist.

6. System nach einem der Ansprüche 3 bis 5, wobei das Steuergerät derart konfiguriert ist, die Drehung der Welle (201) nicht zu erzwingen, wenn die Welle (201) um ihre Längsachse (a) um einen Winkel gedreht wird, der gleich einem oder größer als ein zweiter Schwellenwertwinkel (β2) mit Bezug auf die Position der Welle (201) ist, die der Dichtungsposition (T) des Dichtungselements (101) entspricht, wobei der zweite Schwellenwertwinkel (β2) einer Nicht-Dichtungsposition des Dichtungselements (101) entspricht, die einem Öffnungsgrad des Ventils (100) entspricht, der größer als der Öffnungsgrad des Ventils (100) an der Nicht-Dichtungsposition ist, die dem ersten vorbestimmten Winkel (a1) entspricht.

7. System nach einem der Ansprüche 3 bis 6, wobei das Steuergerät derart konfiguriert ist, dass die Welle (201) sich frei von der Position, die einer Nicht-Dichtungsposition (NT) entspricht, zu der Position drehen kann, die der Dichtungsposition entspricht (T) und umgekehrt, wenn die Welle (201) um ihre Längsachse (a) um einen Winkel gedreht wird, der gleich einem oder größer als ein zweiter Schwellenwertwinkel (β2) mit Bezug auf die Position der Welle (201) ist, die der Dichtungsposition (T) des Dichtungselements (101) entspricht, wobei der zweite Schwellenwertwinkel (β2) einer Nicht-Dichtungsposition des Dichtungselements (101) entspricht, die einem Öffnungsgrad des Ventils (100) entspricht, der größer als der Öffnungsgrad des Ventils (100) an der Nicht-Dichtungsposition ist, die dem ersten vorbestimmten Winkel (a1) entspricht.

8. System nach einem der Ansprüche 6 oder 7, wobei der zweite Schwellenwertwinkel (β2) mindestens gleich 20° ist.

9. System nach einem der vorstehenden Ansprüche, wobei der Stellantrieb (202) aus einem Vierteldrehungs-Stellantrieb besteht.

10. System nach einem der vorstehenden Ansprüche, wobei das Kopplungselement (205) dazu ausgelegt ist, sich um die Längsachse (a) der Welle (201) zu drehen, und wobei der Hohlraum (206) derart ist, dass die Drehung des Kopplungselements (205) die Drehung der Welle (201) nur für vorbestimmte Drehwinkel des Kopplungselements (205) erzwingt.

11. System nach einem der vorstehenden Ansprüche, wobei der Hohlraum (206) einen Bogen der Oberfläche der Welle (201) einnimmt (201), der im Wesentlichen dem Drehwinkel der Welle (201) entspricht, wenn das Dichtungselement (101) sich aus der Dichtungsposition (T) in die Nicht-Dichtungsposition (NT) bewegt, die dem maximalen Öffnungsgrad des Ventils und umgekehrt entspricht.

12. System nach einem der vorstehenden Ansprüche, wobei das Steuergerät eine elektrische Schaltung (400) umfasst, die dazu konfiguriert ist, die Verschiebung des Hohlraums (206) zu steuern.

13. System nach Anspruch 12, wobei die elektrische Schaltung (400) den Betrieb einer pneumatischen Schaltung (300) steuert, die dazu ausgelegt ist, die Verschiebung des Hohlraums (206) zu betätigen.

## Revendications

1. Système pour l'actionnement de l'élément étanche (101) d'un clapet antiretour (100) comprenant :
un élément de commande configuré de sorte que ledit élément étanche (101) soit poussé dans une position non étanche (NT) correspondant à un degré d'ouverture du clapet (100) égal ou supérieur à un premier degré d'ouverture prédéfini lorsque l'augmentation du degré d'ouverture par rapport à une position étanche (T) dudit élément étanche (101) est égale ou supérieure à un seuil prédéfini ;
un arbre (201) adapté pour tourner autour de son axe longitudinal (a) de sorte à déplacer ledit élément étanche (101) de la position étanche (T) à une pluralité de positions non étanches (NT), et vice versa,
l'arbre étant couplé à un actionneur (202) adapté pour coupler l'élément de commande à l'arbre (201),
**caractérisé en ce que** l'arbre (201) comprend un élément en saillie (204) et dans lequel le couplage entre l'actionneur (202) et ledit arbre (201) est réalisé au moyen d'un élément de couplage (205) comprenant une cavité (206) adaptée pour loger ledit élément en saillie (204) de sorte que le déplacement de ladite cavité (206) puisse pousser la rotation dudit arbre (201) autour de son axe longitudinal (a) au moyen dudit élément en saillie (204).

2. Système selon la revendication 1, dans lequel ledit élément de commande est en outre configuré de sorte à supprimer la poussée dudit élément étanche (101) dans une position non étanche (NT) lorsque le degré d'ouverture est égal ou supérieur à un second degré d'ouverture prédéfini, ledit second degré d'ouverture prédéfini étant supérieur audit premier degré d'ouverture prédéfini.

3. Système selon l'une des revendications 1 ou 2, dans lequel ledit élément de commande est configuré de sorte à pousser la rotation dudit arbre (201) autour de son axe longitudinal (a) d'un premier angle prédéfini (a1) par rapport à la position correspondant à la position étanche (T) de l'élément étanche (101) lorsque ledit arbre (201) est tourné autour de son axe longitudinal (a) d'un angle égal ou supérieur à un premier angle seuil (β1) par rapport à la position correspondant à la position étanche (T) de l'élément étanche (101) de sorte à pousser ledit élément étanche (101) dans une position non étanche correspondant à un degré d'ouverture du clapet (100) qui est égal ou supérieur au degré d'ouverture du clapet (100) sur la position non étanche correspondant au premier angle seuil (β1).

4. Système selon la revendication 3, dans lequel ledit premier angle seuil (β1) est supérieur ou égal à 1° et inférieur ou égal à 5°.

5. Système selon l'une des revendications 3 ou 4, dans lequel ledit premier angle prédéfini (a1) est égal à au moins 10°.

6. Système selon l'une des revendications 3 à 5, dans lequel ledit élément de commande est configuré de sorte à ne pas pousser la rotation dudit arbre (201) lorsque ledit arbre (201) est tourné autour de son axe longitudinal (a) d'un angle égal ou supérieur à un second angle seuil (β2) par rapport à la position de l'arbre (201) correspondant à la position étanche (T) de l'élément étanche (101), ledit second angle seuil (β2) correspondant à une position non étanche dudit élément étanche (101) correspondant à un degré d'ouverture du clapet (100) qui est supérieur au degré d'ouverture du clapet (100) sur la position non étanche correspondant audit premier angle prédéfini (a1).

7. Système selon l'une des revendications 3 à 6, dans lequel ledit élément de commande est configuré de sorte que ledit arbre (201) soit libre de tourner de la position correspondant à une position non étanche (NT) à la position correspondant à la position étanche (T) et vice versa lorsque ledit arbre (201) est tourné autour de son axe longitudinal (a) d'un angle égal ou supérieur à un second angle seuil (β2) par rapport à la position de l'arbre (201) correspondant à la position étanche (T) de l'élément étanche (101), ledit second angle seuil (β2) correspondant à une position non étanche dudit élément étanche (101) correspondant à un degré d'ouverture du clapet (100) qui est supérieur au degré d'ouverture du clapet (100) sur la position non étanche correspondant audit premier angle prédéfini (a1).

8. Système selon l'une des revendications 6 ou 7, dans lequel ledit second angle seuil (β2) est égal à au moins 20°.

9. Système selon une revendication précédente, dans lequel ledit actionneur (202) se compose d'un actionneur quart de tour.

10. Système selon une quelconque revendication précédente, dans lequel ledit élément de couplage (205) est adapté pour tourner autour de l'axe longitudinal (a) dudit arbre (201) et dans lequel ladite cavité (206) est telle que la rotation dudit élément de couplage (205) pousse la rotation dudit arbre (201) seulement pour des angles de rotation prédéfinis dudit élément de couplage (205).

11. Système selon une quelconque revendication précédente, dans lequel ladite cavité (206) occupe un arc de la surface dudit arbre (201) correspondant sensiblement à l'angle de rotation dudit arbre (201) lorsque l'élément étanche (101) se déplace de la position étanche (T) à la position non étanche (NT) correspondant au degré d'ouverture maximum du clapet et vice versa.

12. Système selon une quelconque revendication précédente, dans lequel ledit élément de commande comprend un circuit électrique (400) configuré pour commander le déplacement de ladite cavité (206).

13. Système selon la revendication 12, dans lequel ledit circuit électrique (400) commande le fonctionnement d'un circuit pneumatique (300) adapté pour actionner le déplacement de ladite cavité (206).
